# EUROPÄISCHE PATENTSCHRIFT

(11) **EP 2 614 985 B1**
(45) Veröffentlichungstag und Bekanntmachung des Hinweises auf die Patenterteilung: **23.09.2015**
(21) Anmeldenummer: 13150954.9
(22) Anmeldetag: 11.01.2013
(51) Int. Cl.: B60N 2/075, B60N 2/07, F16C 29/02

(54) **Fahrzeugsitz und Verwendung eines gewellten Gleitstabelements**
Vehicle seat, and use of a corrugated sliding bar element
Siège de véhicule et utilisation d'un élément ondulé de tige de coulissement

(30) Priorität: 13.01.2012 DE 102012100287
(43) Veröffentlichungstag der Anmeldung: 17.07.2013
(73) Patentinhaber: GRAMMER AG, 92224 Amberg (DE)
(72) Erfinder: Haller, Erwin, 92262 Birgland (DE); Kolb, Jens, 92281 Königstein (DE)
(74) Vertreter: Hannke, Christian

(56) Entgegenhaltungen:
- EP-A1- 0 685 358
- DE-A1- 3 030 725
- DE-A1- 4 333 891
- FR-A- 1 281 729

## Beschreibung

Die Erfindung betrifft einen Fahrzeugsitz mit einem Sitzteil, mit einem Rückenlehnenteil und mit einer Linearführungsvorrichtung zum translatorischen Verstellen des Fahrzeugsitzes, bei welchem die Linearführungsvorrichtung eine Führungsschieneneinrichtung und eine hierzu verschiebliche Gleitschieneneinrichtung umfasst, bei welchem zwischen der Gleitschieneneinrichtung und der Führungsschieneneinrichtung eine Lagereinrichtung wechselwirkt, welche mindestens Gleitstabelemente umfasst, um die Gleitschieneneinrichtung gegenüber der Führungsschieneneinrichtung zu haltern.

Darüber hinaus betrifft die Erfindung eine Verwendung eines gewellten Gleitstabelements zur Verbauung in den Fahrzeugsitz.

Aus dem Stand der Technik ist es im Bereich des Fahrzeugsitzbaus bekannt, verschieblich zueinander verbaute Schieneneinrichtungen einer Linearführungsvorrichtung zum translatorischen Verstellen eines Fahrzeugsitzes mittels unterschiedlich gestalteter Lagereinrichtungen derart voneinander beabstandet zu halten, dass die miteinander korrespondierenden Schieneneinrichtungen eines Schienenpaars idealerweise nicht direkt aneinander reiben, um stets ein leichtes Verstellen des Fahrzeugsitzes zu gewährleisten.

Beispielsweise ist aus der Patentschrift DBP 1 082 138 ein verstellbarer Fahrzeugsitz für zwei oder mehr Personen bekannt, welcher ein Paar von Sitzverstellvorrichtungen aufweist, wobei jede der Sitzverstellvorrichtungen eine untere und eine obere Laufschiene umfasst. Die untere Laufschiene ist dabei an einer Karosserie eines Fahrzeuges festgelegt, während die obere Laufschiene gegenüber der unteren Laufschiene in deren Längsrichtung gleiten kann. Die beiden Laufschienen werden durch eine Lagereinrichtung voneinander beabstandet, welche hierzu einerseits Rollen aufweist, um die beiden Laufschienen voneinander zu beabstanden. Andererseits sind Kugeln der Lagereinrichtung vorgesehen, die zwischen einander überlappenden Kanten der beiden Laufschienen derart wechselwirken, die beiden Laufschienen radial zur Längsrichtung möglichst spielfrei zueinander gehalten sind. Nachteilig dabei ist es jedoch, dass die Komponenten der Sitzverstellvorrichtungen jeweils mit einer geringen Toleranz gefertigt werden müssen, um eine einigermaßen zufriedenstellende Spielfreiheit insbesondere zwischen den beiden Laufschienen gewährleisten zu können.

Des Weiteren ist aus der Offenlegungsschrift DE 24 29 019 A1 ein horizontal und vertikal verstellbarer Kraftfahrzeugsitz bekannt, bei welchem Gleitschienen an hierzu korrespondierenden Führungsschienen einer Linearführungsvorrichtung ebenfalls mittels einer Rollen- und Kugelanordnung abgestützt sind, um eine translatorische und möglichst spielfreie Verstellung des Kraftfahrzeugsitzes zu ermöglichen. Auch hier sind geringe Bauteiltoleranzen hinsichtlich einer ausreichenden Spielfreiheit zwischen den Führungsschienen und den Gleitschienen erforderlich.

Aus der Offenlegungsschrift DE 27 15 640 A1 ist zudem eine Gleitschienenführung für Fahrzeugschiebesitze bekannt, bei welcher eine geführte Schiene und eine führende Schiene einerseits mittels Kugeln und andererseits mittels eines in einem Gleitschuh geführten Strangs aus einem elastischen Material verschieblich zueinander gehaltert sind. Mittels des Stangs aus dem elastischen Material soll eine spielfreie Führung zwischen den beiden miteinander korrespondierenden Schienen selbst im entlasteten Zustand der Gleitschienenführung erzielt werden. Nachteilig ist es jedoch, dass durch Materialermüdung speziell des elastischen Materials des Strangs die Spielfreiheit zwischen der geführten und der führenden Schiene vorzeitig verloren gehen kann.

Darüber hinaus ist es aus dem Stand der Technik bekannt, anstelle der vorstehend beschriebenen Kugeln bzw. Rollen einer Lagereinrichtung auch Gleitstabelemente zu verwenden, um miteinander korrespondierende Schieneneinrichtungen verschieblich zueinander zu lagern. Jedoch besteht dabei das Problem, dass eine anfänglich noch vorhandene Spielfreiheit aufgrund von Verschließ des Gleitstabelements ebenfalls vorzeitig verloren geht.

Grundsätzlich gelingt es anhand der vorstehend beschriebenen Lösungen, Schieneneinrichtungen von Linearführungen eines Fahrzeugsitzes nahezu spielfrei zueinander zu lagern. Jedoch ist hierzu bei den meisten Lösungen ein relativ hoher Herstellungsaufwand erforderlich, um eine akzeptable spielfreie Anordnung aus Schieneneinrichtungen und Lagereinrichtungskomponenten herzustellen. Zudem versagen derartige Anordnungen oftmals, sodass nach einer gewissen Gebrauchsdauer des Fahrzeugsitzes, welche deutlich unter der durchschnittlichen Lebensdauer eines Fahrzeugs liegt, ein spielfreies Zusammenwirken der Schieneneinrichtungen nicht mehr zufriedenstellend gewährleistet werden kann.

Speziell ein Spiel in der Linearführungseinrichtung führt in der Praxis häufig dazu, dass man bei wechselseitiger Belastung im Sitzsystem einen Leerhub der Gleiter als harte Anschläge wahrnimmt. Zudem wirkt dies als instabiles Führungssystem, da durch das seitliche Spiel ein rotativer Freiheitsgrad im Gesamtsystem entsteht.

DE 43 33 891 zeigt einen Fahrzeugsitz mit den Merkmalen des Oberbegriffs des Anspruchs 1.

Es ist daher Aufgabe vorliegender Erfindung, Fahrzeugsitze derart weiterzuentwickeln, dass deren Linearführungsvorrichtungen hinsichtlich einer spielfreien Lagerung langlebiger funktionierend und zudem konstruktiv einfacher aufgebaut sind.

Die Aufgabe der Erfindung wird von einem Fahrzeugsitz mit den Merkmalen des Anspruchs 1 gelöst.

Durch das derart ausgestaltete Gleitstabelement bzw. dessen Grundkörper ist auf konstruktiv außerordentlich einfache Weise eine extrem langlebige spielfreie Lagerung speziell zwischen den beiden Schieneneinrichtungen erzielt, da dieses Gleitstabelement lediglich bereichsweise mit den beiden Schieneneinrichtungen in Wirkkontakt treten kann.

Insofern steht über einen weitaus längeren Zeitraum ein zwischen der Gleitschieneneinrichtung und der Führungsschieneneinrichtung federndes und/oder dämpfendes Element zur

Verfügung, um eine besonders langlebige insbesondere radiale spielfreie Lagerung gewährleisten zu können. Zudem kann die Gleitschieneneinrichtung aufgrund des bereichsweisen Wirkkontaktes wesentlich einfacher gleiten.

Besonders die Gefahr einer unerwünschten Klemmung der Anordnung aus Führungsschieneneinrichtung, Gleitschieneneinrichtung und Gleitstabelement kann erstmals vollständig vermieden werden, da das vorliegende gewellte Gleitstabelement radial federn kann, wie nachstehend noch ausführlich erläutert ist.

Somit können Fahrzeugsitze hinsichtlich ihrer Längs- und/oder Seitenverstellungseinrichtungen bzw. hinsichtlich ihrer Horizontalfederungseinrichtungen vorteilhaft verschoben werden.

Darüber hinaus kann auf verschiedene Stabdurchmesser verzichtet werden, um Fertigungstoleranzen hinsichtlich der Führungsschieneneinrichtung und der Gleitschieneneinrichtung auszugleichen, wodurch sich der Montageaufwand wesentlich vereinfacht. Vorteilhafter weise kann hierdurch ein Toleranzausgleich erzielt werden, für welchen bisher immer unterschiedliche Stabdurchmesser erforderlich waren.

Der "Effektivaußendurchmesser" wird im Sinne der Erfindung durch radial weiter außenliegende Mantelflächenbereiche des Grundkörpers des Gleitstabelements als durch radial weiter innenliegende Mantelflächenbereiche des Grundkörpers formuliert.

Der "Kerndurchmesser" ist erfindungsgemäß durch den eigentlichen Materialquerschnitt des Grundkörpers des Gleitstabelements gekennzeichnet.

Eine besonders gute Stabilität des Gleitstabelements kann erfindungsgemäß gewährleistet werden, wenn der Grundkörper einen Kerndurchmesser zwischen 2 mm und 15 mm aufweist. In diesem Ausführungsbeispiel ist ein Kerndurchmesser von 4,85 mm gewählt.

Trotz des gewellten Grundkörpers des Gleitstabelements besitzt das vorliegende Gleitstabelement nahezu die gleiche Tragfähigkeit wie ein gerade ausgestaltetes Gleitstabelement.

Insofern gestalten die radial weiter außenliegenden Mantelflächenbereiche Wellenberge und die radial weiter innenliegenden Mantelflächenbereiche entsprechende Wellentäler an der Umfangsfläche des Gleitstabelements aus, welche entlang der Längserstreckung des Gleitstabelements abwechselnd angeordnet sind. Die Wellenberge formulieren hierbei die eigentlichen Gleitführungspunkte des Gleitstabelements.

Der Begriff "Führungsschieneneinrichtung" beschreibt eine im Wesentlichen feststehende bzw. idealweise ortsfest an einer Karosserie eines Fahrzeugs montierte Schieneneinrichtung, an welcher die Gleitschieneneinrichtung translatorisch geführt ist. Vorteilhafter Weise kann die Führungsschieneneinrichtung auch von einem karosserieseitigen Bauteil ausgestaltet sein, sodass auf ein diesbezügliches separates Schieneneinrichtungsbauteil verzichtet werden kann.

Insofern beschreibt der Begriff "Gleitschieneneinrichtung" im Wesentlichen eine an der Führungsschieneneinrichtung geführte Schieneneinrichtung. Diese ist vorzugsweise an dem Fahrzeugsitz bzw. an einem Fahrzeugsitzunterbau befestigt oder von einem solchen sogleich ausgestaltet. Bei letzterer Variante kann vorteilhafter Weise wieder auf ein separates Schieneneinrichtungsbauteil verzichtet werden.

Der Begriff "radial" beschreibt eine Wirkrichtung an der Linearführungseinrichtung, welche im Wesentlichen quer zur Längserstreckung der Linearführungseinrichtung, insbesondere der Führungsschieneneinrichtung bzw. der Gleitschieneneinrichtung, verläuft.

Auf separate bzw. vereinzelte Schieneneinrichtungen kann vorliegend problemlos verzichtet werden, da die Schieneneinrichtungen aufgrund des erfindungsgemäßen Gleitstabelements mit einer weniger hohen Toleranz hergestellt werden können, sodass sie auch mittels anderer Funktionsbauteile realisiert werden können, an welche hinsichtlich Herstellungstoleranzen weniger hohe Anforderungen gestellt werden.

Insofern ist es ebenfalls vorteilhaft, wenn die Führungsschieneneinrichtung und/oder die Gleitschieneneinrichtung jeweils durch wenigstens ein Funktionsbauteil des Fahrzeugsitzes ausgestaltet sind.

Für die Begriffe "Führungsschieneneinrichtung" und "Gleitschieneneinrichtung" wird im Zusammenhang mit vorliegender Erfindung der Einfachheit halber auch allgemein von Schieneneinrichtungen gesprochen. Die Schieneneinrichtungen können vorteilhaft aus profilgewalzten Blechteilen hergestellt werden.

Die Schieneneinrichtungen können hierbei nahezu beliebig ausgestaltet sein, solange sie derart zueinander wechselwirkend angeordnet sind, dass sie gemeinsam einen betriebssicheren Aufnahmeraum ausgestalten, in welchem mindestens ein Gleitstabelement längs der Schieneneinrichtungen angeordnet werden kann.

Vorzugsweise sind hierzu jeweils in Längserstreckung der Schieneneinrichtungen verlaufende korrespondierende Endseitenbereiche der Führungsschieneneinrichtung und der Gleitschieneneinrichtung c-profilförmig ausgestaltet, sodass sowohl die Führungsschieneneinrichtung als auch die Gleitschieneneinrichtung das jeweilige Gleitstabelement zumindest teilweise umgreifen.

Hierbei ergeben sich vorteilhafter Weise ein maximales Höhenspiel von 0,6 mm und ein maximales Seitenspiel von 0,8 mm zwischen den beiden miteinander korrespondierenden Schieneneinrichtungen selbst bei einer extrem langen Einsatzzeit. Ein derartig geringes Höhenspiel bzw. Seitenspiel kann bezogen auf einen Fahrzeugsitz praktisch als vernachlässigbar gering und im Sinne der Erfindung als nahezu spielfrei angesehen werden.

Es versteht sich dass auch das Gleitstabelement durch unterschiedlichste Grundkörper realisiert sein kann. Idealerweise weist es einen länglichen Grundkörper mit einem im Wesentlichen runden Materialquerschnitt auf.

Im Gegensatz zu der Gleitschienenführung aus der eingangs erwähnten DE 27 15 640 A1 wird vorliegend erfindungsgemäß einer spielfreie Lagerung der Gleitschieneneinrichtung an der Führungsschieneneinrichtung durch die Gestalt des Gleitstabelements und nicht durch die Materialwahl des Strangs erzielt.

Insofern zeichnet sich das hier eingesetzte Gleitstabelement nicht durch ein elastisches Material, wie etwa einem Elastomer, aus. Vielmehr besteht das vorliegende Gleitstabelement idealerweise aus einem härteren Kunststoff, wie einem Thermoplast, wodurch es auch verfahrenstechnisch äußerst einfach hergestellt werden kann. Es könnten jedoch auch Duroplaste zum Einsatz kommen, wenngleich diese sprödere Materialeigenschaften aufweise und deswegen schlag- und stoßanfälliger sind.

Ist das Gleitstabelement mit Teflon oberflächenbeschichtet, kann das Gleitstabelement vorteilhafter Weise mit einer besonders verschleißfesten Mantelfläche ausgestaltet werden. Darüber hinaus können mit einer derartigen Teflonbeschichtung auch besonders gute Gleiteigenschaften erzielt werden, wodurch eine Fahrzeugsitzverstellung mit weniger Kraft bewerkstellig werden kann.

Gegebenenfalls kann der Grundkörper des vorliegenden Gleitstabelements auch aus einem Metall oder dergleichen bereitgestellt werden, wenn dieser eine reibungsreduzierende Teflonbeschichtung aufweist.

Jedenfalls können mittels einer entsprechenden Materialauswahl hinsichtlich des Grundkörpers vorteilhafter Weise kumulativ Dämpfungseigenschaften des Gleitstabelementes eingestellt werden. Dies ist hinsichtlich unterschiedlicher Haupteinsatzbereiche, beispielsweise bezüglich eines Nutzfahrzeugs oder PKW, des Fahrzeugsitzes vorteilhaft. Insofern kann speziell durch das vorliegende Gleitstabelement mit seinem gewellten Grundkörper vorteilhafter Weise sogleich eine radial wirkende Dämpfungseinrichtung zwischen den beiden Schieneneinrichtungen der Linearführungsvorrichtung des Fahrzeugsitzes geschaffen werden.

Eine bevorzugte Ausführungsvariante sieht hierbei vor, dass das Gleitstabelement ein Radialwendelfederelement umfasst. Insbesondere hierdurch kann konstruktiv einfach sichergestellt werden, dass das Gleitstabelement in Richtung seiner Längserstreckung gewellt und damit auch derart mehrfach gekrümmt ausgestaltet ist, dass es mit seiner Mantelfläche nur bereichsweise mit der Führungsschieneneinrichtung und der Gleitschieneneinrichtung in Wirkkontakt tritt.

Vorteilhafter Weise weist das vorliegende Gleitstabelement eine Steigung zwischen den einzelnen radial weiter außenliegenden Mantelflächenbereichen mit einem Wert größer 5 mm, vorzugsweise größer 10 mm, und mit einem Wert kleiner 50 mm, vorzugsweise kleiner 20 mm, auf. Hierdurch kann gewährleistet werden, dass an dem Gleitstabelement eine ausreichend große Anzahl an derartigen radial weiter außenliegenden Mantelflächenbereichen vorhanden ist, um die gewünschte Funktionalität zu erzielen.

Der Begriff "Steigung" beschreibt im Sinne der Erfindung eine Wendelsteigung mit einem Abstand zwischen zwei nächstliegend benachbarten radial weiter außenliegenden Mantelflächenbereichen, wobei es keine Rolle spielt, wo sich diese beiden nächstliegend benachbarten radial weiter außenliegenden Mantelflächenbereiche an dem Umfang des Gleitstabelements befinden. Der Abstand wird hierbei im Wesentlichen parallel und in Richtung der Längserstreckung des Gleitstabelements gemessen.

Die Wendelsteigung, welcher als Parameter steuerbar ist, bestimmt im Einbauzustand die Anzahl der Gleitführungspunkte bzw. die Federkraft/Federrate, welche in radialer Richtung wirkt.

Vorteilhafter Weise ist das Gleitstabelement entlang seiner Längserstreckung spiralförmig verdreht ausgestaltet. Hierdurch kann das erfindungsgemäße Gleitstabelement besonders einfach hergestellt werden.

Vorteilhafter Weise kann mittels eines insbesondere schraubenförmigen Gleitstabelementes einerseits eine besonders langlebige spielfreie Lagerungseinrichtung und andererseits kumulativ eine gute Dämpfungseinrichtung bereitgestellt werden.

Darüber hinaus ist es vorteilhaft, wenn das Gleitstabelement an seiner Umfangsfläche eine Vielzahl an radialen Erhebungen aufweist, und die radialen Erhebungen in Umfangsrichtung derart angeordnet sind, dass das Gleitstabelement lediglich punktuell mit den Schieneneinrichtungen in Wirkkontakt treten kann.

Insofern sieht eine weitere vorteilhafte Ausführungsvariante vor, dass das Gleitstabelement zumindest im radial unbelasteten Zustand entlang seiner Längserstreckung radial lediglich punktuell mit der Führungsschieneneinrichtung und/oder mit der Gleitschieneneinrichtung in Wirkkontakt steht.

Hierdurch unterscheidet sich das vorliegende Gleitstabelement von herkömmlichen Gleitstabelementen, da diese insbesondere in Richtung ihrer Längserstreckung zumindest linienförmig mit den Schieneneinrichtungen in Wirkkontakt stehen. Damit können insbesondere die federnden Eigenschaften des vorliegenden Gleitstabelements jedoch nicht oder nur unzureichend erzielt werden.

Es ist darüber hinaus vorteilhaft, wenn das Gleitstabelement eine Einhüllende bildet, welche ein Raumvolumen entlang der Längserstreckung des Gleitstabelementes umgibt, welches größer ist als ein von dem Gleitstabelement umfasstes Raumvolumen. Die Einhüllende definiert sich im Sinne der Erfindung mittels der radial weiter außenliegenden Mantelflächenbereiche des Gleitstabelementes.

Speziell durch das vorliegende Gleitstabelement mit seinem gewellten Grundkörper kann vorteilhafter Weise sogleich eine radial wirkende Federungseinrichtung zwischen den beiden Schieneneinrichtungen der Linearführungsvorrichtung des Fahrzeugsitzes geschaffen werden, sodass eine besonders langlebige Spielfreiheit zwischen der Führungsschieneneinrichtung und der Gleitschieneneinrichtung gewährleistet werden kann.

Besonders vorteilhaft ist es, wenn das Gleitstabelement einen radialen Federweg von mehr als 0,3 mm, vorzugsweise von mehr als 0,5 mm, und weniger als 5 mm, vorzugsweise von weniger als 1,5 mm, idealerweise von 0,75 mm aufweist. Durch einen derartigen radialen Federweg kann eine außergewöhnlich langlebige Spielfreiheit gewährleistet werden.

Es ist des Weiteren vorteilhaft, wenn das Gleitstabelement radial vorgespannt zwischen der Führungsschieneneinrichtung und der Gleitschieneneinrichtung derart angeordnet ist, dass die Gleitschieneneinrichtung gegenüber der Führungsschieneneinrichtung spielfrei gelagert angeordnet ist.

Eine vorteilhafte Lagerung insbesondere des vorliegenden Gleitstabelements zwischen den beiden Schieneneinrichtungen kann baulich einfach erzielt werden, wenn das Gleitstabelement einen Grundkörper aufweist, der entlang der Längserstreckung des Gleitstabelements einen im Wesentlichen gleichförmigen Materialquerschnitt aufweist, wobei der Grundkörper bereichsweise außermittig der Mittelachse des Gleitstabelements angeordnet ist.

Um insbesondere größere zwischen der Gleitschieneneinrichtung und der Führungsschieneneinrichtung wirkende Kräfte dauerhaft gut übertragen zu können, ist es vorteilhaft, wenn die Lagereinrichtung Wälzkörperelemente umfasst

Hinsichtlich eines weiteren Aspekts der Erfindung wird die vorliegende Aufgabe auch durch eine Verwendung eines gewellten Gleitstabelements zum spielfreien Lagern zweier relativ zueinander verschieblich gelagerter Führungsschienen einer Linearführungsvorrichtung eines Fahrzeugsitzes gelöst. Vorteilhafter Weise kann ein einfach gewelltes Gleitstabelement als Lagerelement zum spielfreien Lagern einer Gleitschieneneinrichtungen und einer Führungsschieneneinrichtung der Linearführungseinrichtung des Fahrzeugsitzes verwendet werden.

Weitere Vorteile, Ziele und Eigenschaften vorliegender Erfindung werden anhand anliegender Zeichnung und nachfolgender Beschreibung erläutert, in welchen beispielhaft ein Fahrzeugsitz insbesondere umfassend eine Linearführungsvorrichtung mit einer Führungsschieneneinrichtung, mit einer Gleitschieneneinrichtung und mit einer zumindest einen gewellten Gleitstabelement aufweisenden Lagereinrichtung zum beabstandeten Halten der Führungsschieneneinrichtung und der Gleitschieneneinrichtung zueinander dargestellt und beschrieben ist. In der Zeichnung zeigen:
- Figur 1: schematisch eine Seiten-Rückansicht eines Fahrzeugsitzes umfassend eine Linearführungsvorrichtung mit zwei Schienenführungspaaren bestehend jeweils aus einer Führungsschieneneinrichtung, einer Gleitschieneneinrichtung und einer zumindest einen gewellten Gleitstabelement aufweisenden Lagereinrichtung zum beabstandeten Halten der Führungsschieneneinrichtung und der Gleitschieneneinrichtung zueinander;
- Figur 2: schematisch eine Detailansicht der Linearführungseinrichtung des Fahrzeugsitzes aus der Figur 1;
- Figur 3: schematisch eine Prinzipvorderansicht eines der Schieneneinrichtungspaare der Linearführungseinrichtung des Fahrzeugsitzes aus den Figuren 1 und 2;
- Figur 4: schematisch eine perspektivische Ansicht des gewellten Gleitstabelements der Linearführungseinrichtung des Fahrzeugsitzes aus den Figuren 1 bis 3;
- Figur 5: schematisch eine Seitenansicht des gewellten Gleitstabelements der Linearführungseinrichtung des Fahrzeugsitzes aus den Figuren 1 bis 4;
- Figur 6: schematisch eine Vorderansicht des gewellten Gleitstabelements der Linearführungseinrichtung des Fahrzeugsitzes aus den Figuren 1 bis 5 mit erkennbaren Kernaußendurchmesser und Effektivaußendurchmesser;
- Figur 7: schematisch eine Schnittansicht entlang der Schnittlinie A-A des gewellten Gleitstabelements der Linearführungseinrichtung des Fahrzeugsitzes aus den Figuren 1 bis 6;
- Figur 8: schematisch eine Schnittansicht entlang der Schnittlinie B-B des gewellten Gleitstabelements der Linearführungseinrichtung des Fahrzeugsitzes aus den Figuren 1 bis 7; und
- Figur 9: schematisch eine Schnittansicht entlang der Schnittlinie C-C des gewellten Gleitstabelements der Linearführungseinrichtung des Fahrzeugsitzes aus den Figuren 1 bis 8.

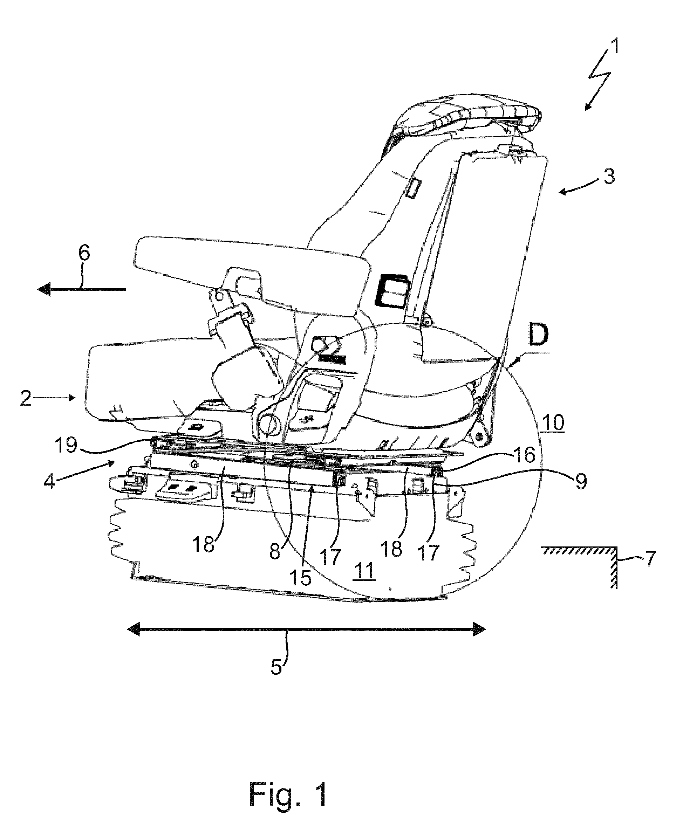

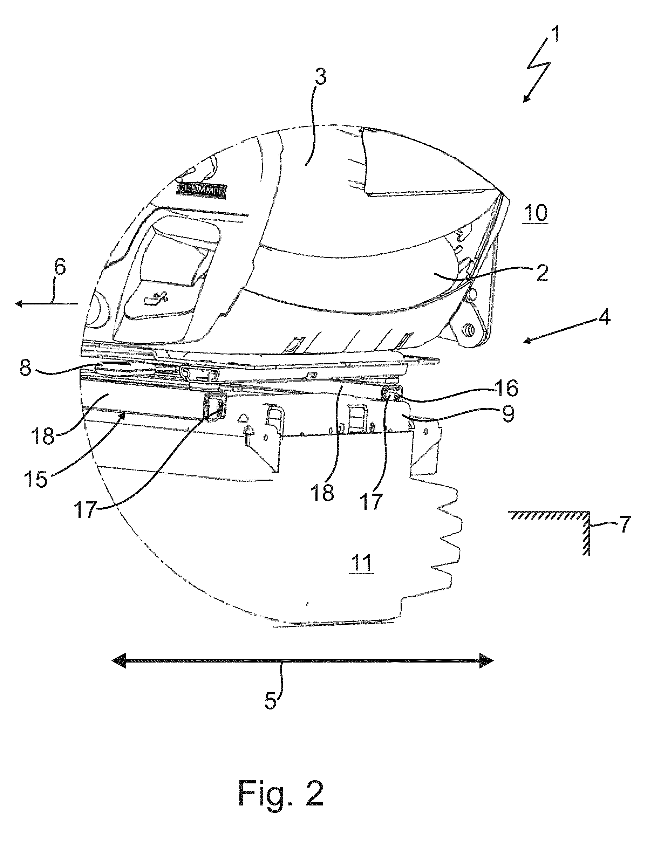

Der in den Figuren 1 und 2 gezeigte Fahrzeugsitz 1 weist im Wesentlichen ein Sitzteil 2, ein Rückenlehnenteil 3 und eine Linearführungseinrichtung 4 auf, mittels welcher der Fahrzeugsitz 1 translatorisch in Längsrichtung 5 bezüglich einer Vorwärtsfahrtrichtung 6 eines hier nicht näher gezeigten Fahrzeuges 7 vor und entgegen dieser Vorwärtsfahrtrichtung 6 zurück verstellt werden kann, wenn ein Bedienhebel 8 zum Entriegeln einer nicht gezeigten Verriegelungseinrichtung der Linearführungseinrichtung 4 entsprechend betätigt wird.

Die Linearführungsvorrichtung 4 ist mittels einer Montageeinheit 9 oberseitig 10 an einer karosserieseitigen Federungs- und Dämpfungskonsole 11 befestigt.

Die Linearführungseinrichtung 4 umfasst unter anderem zwei Schieneneinrichtungspaare 15 und 16, mittels welchen die translatorische Verstellung des Fahrzeugsitzes 1 gegenüber der karosserieseitigen Federungs- und Dämpfungskonsole 11 gewährleistet wird.

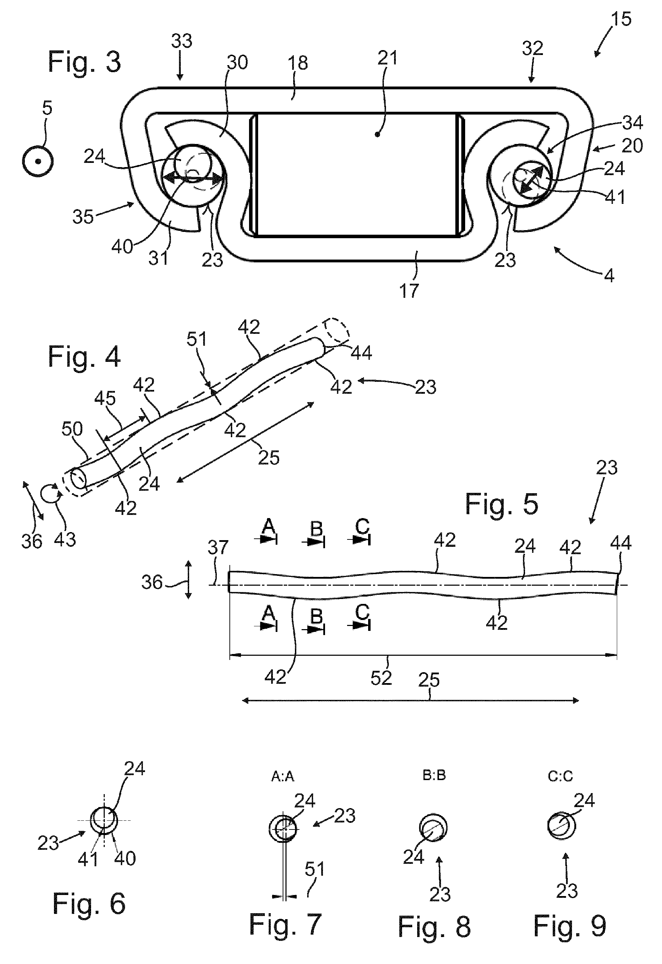

Wie insbesondere nach der Darstellung der Figur 3 gut zu erkennen ist, umfasst jedes der Schieneneinrichtungspaare 15 und 16 jeweils eine Führungsschieneneinrichtung 17 (hier nur exemplarisch beziffert) und eine dieser gegenüber verschiebliche Gleitschieneneinrichtung 18 (hier ebenfalls nur exemplarisch beziffert).

Die Führungsschieneneinrichtungen 17 sind über die Montageeinheit 9 ortsfest an der karosserieseitigen Federungs- und Dämpfungskonsole 11 befestigt. Die Gleitschieneneinrichtungen 18 sind dementsprechend ortsfest an einem Fahrzeugsitzgestell 19, welches unterhalb des Sitzteils 2 platziert ist, befestigt.

Darüber hinaus umfasst die Linearführungseinrichtung 4 bezüglich jedes Schieneneinrichtungspaar 15 bzw. 16 jeweils eine Lagereinrichtung 20 (siehe Figur 3), welche einerseits handelsübliche Wälzkörperelemente 21 in Gestalt von Zylinderrollenlagern 22 und andererseits erfindungsgemäß Gleitstabelemente 23 mit jeweils einem länglichen gewellten Grundkörper 24 aufweist. Dementsprechend sind auch die Gleitstabelemente 23 in Richtung ihrer Längserstreckung 25 gewellt.

Die Zylinderrollenlager 22 stützen die Führungsschieneneinrichtung 17 und die Gleitschieneneinrichtung 18 derart gegeneinander ab, dass die Gleitschieneneinrichtung 18 translatorisch gegenüber der Führungsschieneneinrichtung 17 gemäß der Längsrichtung 5 translatorisch verschieblich ist.

Die Gleitschieneneinrichtung 18 ist im Wesentlichen seitlich radial von der Führungsschieneneinrichtung 17 umgriffen. Hierbei sind die Führungsschieneneinrichtung 17 und die Gleitschieneneinrichtung 18 derart profilgewalzt, dass an ihren jeweiligen sich in Längssichtung 5 verlaufenden Endseitenbereichen 30 und 31 (hier nur exemplarisch beziffert) sowohl auf einer rechten Schieneneinrichtungspaarseite 32 als auch auf einer linken Schieneneinrichtungspaarseite 33 jeweils ein Aufnahmeraum 34 bzw. 35 zur Aufnahme eines Gleitstabelements 23 ausgestaltet ist.

Durch Einsetzen der gewellten Gleitstabelemente 23 sind die Führungsschieneneinrichtung 17 und die Gleitschieneneinrichtung 18 in Zusammenarbeit mit den Zylinderrollenlagern 22 zueinander radial 36 (siehe insbesondere Figuren 4 und 5) spielfrei vorgespannt.

Die Wirkrichtung radial 36 bezieht sich hierbei auf die sich in Längserstreckung 25 verlaufende Mittelachse 37 des Gleitstabelements 23.

Wie bereits gut nach der Darstellung der Figur 3 erkennbar ist, weist der gewellte Grundkörper 24 erfindungsgemäß einen Effektivaußendurchmesser 40 auf, welcher zumindest in einem radial 36 unbelasteten Zustand des Gleitstabelements 23 größer ist als ein Kernaußendurchmesser 41 des gewellten Grundkörpers 24.

Hierdurch wohnen dem Gleitstabelement 23 einerseits sehr gute Federungseigenschaften und andererseits ebenso gute Dämpfungseigenschaften inne.

Darüber hinaus gelingt durch den wellenartig geformten Grundkörper 24 konstruktiv einfach eine langlebige und gute spielfreie Lagerung der Gleitschieneneinrichtung 18 an der Führungsschieneneinrichtung 17 bzw. umgekehrt.

Außerdem reduziert sich der Reibungswiderstand zwischen dem Gleitstabelement 23 und der Führungsschieneneinrichtung 17 bzw. der Gleitschieneneinrichtung 18 erheblich, da das Gleitstabelement 23 nur noch bereichsweise bzw. idealerweise punktuell mit der Führungsschieneneinrichtung 17 bzw. der Gleitschieneneinrichtung 18 wechselwirkt. Somit müssen geringere Verstellkräfte zum Verstellen des Fahrzeugsitzes aufgebracht werden.

Die Gleiteigenschaften des Gleitstabelements 23 gegenüber der Führungsschieneneinrichtung 17 bzw. der Gleitschieneneinrichtung 18 können weiter dadurch verbessert werden, dass das Gleitstabelement 23 mit Teflon oberflächenbeschichtet ist.

Das Gleitstabelement 23 ist entlang seiner Längserstreckung 25 spiralförmig verdreht ausgestaltet, sodass radial 36 weiter außenliegende Mantelflächenbereiche 42 nicht nur in der Längserstreckung 25 des Gleitstabelements 23 verteilt angeordnet sind sondern auch hinsichtlich der Umfangserstreckung 43. Dies ist auch sehr gut nach der Darstellung der Figur 3 zu sehen, in welcher die radial 36 weiter außenliegenden Mantelflächenbereiche 42 jeweils durch den kleineren Kernaußendurchmesser 41 in verschiedenen Positionen sowohl an der rechten als auch an der linken Schieneneinrichtungspaarseite 32 und 33 auch in der gestrichelten Kreisliniendarstellung abgebildet ist. Somit kommt das Gleitstabelement 23 unter normalen Belastungsbedingungen auch nur mit den weiter außenliegenden Mantelflächenbereichen 42 mit der Führungsschieneneinrichtung 17 bzw. der Gleitschieneneinrichtung 18 in Wirkkontakt.

Insofern ist das Gleitstabelement 23 als Radialwendelfederelement 44 mit einer Steigung von 10 mm ausgestaltet, wobei die vorliegende Steigung sich im Sinne der Erfindung durch einen Abstand 45 (siehe Figur 4) zweier nächstliegend benachbarter radial 36 weiter außenliegender Mantelflächenbereiche 42 formuliert.

Durch die radial 36 weiter außenliegenden Mantelflächenbereiche 42 definiert das gewellte Gleitstabelement 23 eine Einhüllende 50 (siehe Figur 4), welche ein Raumvolumen entlang der Längserstreckung 25 des Gleitstabelementes 23 umgibt, welches größer ist als ein von dem Gleitstabelement 23 umfasstes Raumvolumen. Hierdurch kann in diesem Ausführungsbeispiel konstruktiv einfach ein radialer Federweg 51 von 0,75 mm erzielt werden.

Das Gleitstabelement 23 besitzt in diesem Ausführungsbeispiel eine Länge 52 von 87,5 mm.

Die Darstellungen der Figuren 5 bis 9 zeigen das Gleitstabelement 23 zusätzlich noch in einer Seitenansicht (Figur 5), in einer Vorderansicht (Figur 6) und in unterschiedlichen Querschnittsansichten (Figuren 7 bis 9) entlang der Schnittlinien A-A, B-B und C-C. Da die Darstellungen auch durch die vorstehenden Erläuterungen selbsterklärend sind und um Wiederholungen zu vermeiden, wird auf eine deren explizite Kommentierung verzichtet.

Es versteht sich, dass es sich bei dem vorstehend erläuterten Ausführungsbeispiel lediglich um eine erste Ausgestaltung des erfindungsgemäßen Fahrzeugsitzes umfassend ein Gleitstabelement mit einem gewellten Grundkörper handelt. Insofern beschränkt sich die Ausgestaltung der Erfindung nicht auf dieses erste Ausführungsbeispiel.

Sämtliche in den Anmeldungsunterlagen offenbarten Merkmale werden als erfindungswesentlich beansprucht, sofern sie einzeln oder in Kombination gegenüber dem Stand der Technik neu sind.

### Bezugszeichenliste

- 1: Fahrzeugsitz
- 2: Sitzteil
- 3: Rückenlehnenteil
- 4: Linearführungseinrichtung
- 5: Längsrichtung
- 6: Vorwärtsfahrtrichtung
- 7: Fahrzeug
- 8: Bedienhebel
- 9: Montageeinheit
- 10: oberseitig
- 11: karosserieseitige Federungs- und Dämpfungskonsole
- 15: erstes Schieneneinrichtungspaar
- 16: zweites Schieneneinrichtungspaar
- 17: Führungsschieneneinrichtung
- 18: Gleitschieneneinrichtung
- 19: Fahrzeugsitzgestell
- 20: Lagereinrichtung
- 21: Wälzkörperelemente
- 22: Zylinderrollenlager
- 23: Gleitstabelemente
- 24: gewellter Grundkörper
- 25: Längserstreckung
- 30: Endseitenbereiche der Führungsschieneneinrichtung
- 31: Endseitenbereiche der Gleitschieneneinrichtung
- 32: rechte Schieneneinrichtungspaarseite
- 33: linke Schieneneinrichtungspaarseite
- 34: rechter Aufnahmeraum
- 35: linker Aufnahmeraum
- 36: radial
- 37: Mittelachse
- 40: Effektivaußendurchmesser
- 41: Kernaußendurchmesser
- 42: weiter außenliegende Mantelflächenbereiche
- 43: Umfangserstreckung
- 44: Radialwendelfederelement
- 45: Abstand
- 50: Einhüllende
- 51: radialer Federweg
- 52: Länge

## Patentansprüche

1. Fahrzeugsitz (1) mit einem Sitzteil (2), mit einem Rückenlehnenteil (3) und mit einer Linearführungsvorrichtung (4) zum translatorischen Verstellen des Fahrzeugsitzes (1), bei welchem die Linearführungsvorrichtung (4) eine Führungsschieneneinrichtung (17) und eine hierzu verschiebliche Gleitschieneneinrichtung (18) umfasst, bei welchem zwischen der Gleitschieneneinrichtung (18) und der Führungsschieneneinrichtung (17) eine Lagereinrichtung (19) wechselwirkt, welche mindestens Gleitstabelemente (23) umfasst, um die Gleitschieneneinrichtung (18) gegenüber der Führungsschieneneinrichtung (17) zu haltern,
wobei das Gleitstabelement (23) einen länglichen gewellten Grundkörper (24) aufweist, wobei das Gleitstabelement (23) einen Effektivaußendurchmesser (40) aufweist, welcher zumindest in einem radial (36) unbelasteten Zustand des Gleitstabelements (23) größer ist als ein Kernaußendurchmesser (41) des länglichen gewellten Grundkörpers (24), **dadurch gekennzeichnet, dass** der Grundkörper einen Kerndruchmesser zwischen 2 mm und 15 mm aufweist, wobei der Kerndurchmesser dem Materialquerschnitt des Grundkörpers entspricht.

2. Fahrzeugsitz (1) nach Anspruch 1,
**dadurch gekennzeichnet, dass.**
das Gleitstabelement (23) ein Radialwendelfederelement (44) umfasst.

3. Fahrzeugsitz (1) nach Anspruch 1 oder 2,
**dadurch gekennzeichnet, dass**
das Gleitstabelement (23) entlang seiner Längserstreckung (25) spiralförmig verdreht ausgestaltet ist.

4. Fahrzeugsitz (1) nach einem der Ansprüche 1 bis 3,
**dadurch gekennzeichnet, dass**
das Gleitstabelement (23) mit Teflon oberflächenbeschichtet ist.

5. Fahrzeugsitz (1) nach einem der Ansprüche 1 bis 3,
**dadurch gekennzeichnet, dass**
das Gleitstabelement (23) zumindest im radial (36) unbelasteten Zustand entlang seiner Längserstreckung (25) radial (36) lediglich punktuell mit der Führungsschieneneinrichtung (17) und/oder mit der Gleitschieneneinrichtung (18) in Wirkkontakt steht.

6. Fahrzeugsitz (1) nach einem der Ansprüche 1 bis 5,
**dadurch gekennzeichnet, dass**
das Gleitstabelement (23) eine Einhüllende (50) bildet, welche ein Raumvolumen entlang der Längserstreckung (25) des Gleitstabelementes (23) umgibt, welches größer ist als ein von dem Gleitstabelement (23) umfasstes Raumvolumen.

7. Fahrzeugsitz (1) nach einem der Ansprüche 1 bis 6,
**dadurch gekennzeichnet, dass**
das Gleitstabelement (23) einen radialen Federweg (51) von mehr als 0,3 mm, vorzugsweise von mehr als 0,5 mm, und weniger als 5 mm, vorzugsweise von weniger als 1,5 mm, idealerweise von 0,75 mm aufweist.

8. Fahrzeugsitz (1) nach einem der Ansprüche 1 bis 7,
**dadurch gekennzeichnet, dass**
die Lagereinrichtung (20) Wälzkörperelemente (21) umfasst.

9. Fahrzeugsitz (1) nach einem der Ansprüche 1 bis 8,
**dadurch gekennzeichnet, dass**
die Führungsschieneneinrichtung (17) und/oder die Gleitschieneneinrichtung (18) jeweils durch wenigstens ein Funktionsbauteil des Fahrzeugsitzes (1) ausgestaltet sind.

10. Fahrzeugsitz (1) nach einem der Ansprüche 1 bis 9,
**dadurch gekennzeichnet, dass**
das Gleitstabelement (23) radial (36) vorgespannt zwischen der Führungsschieneneinrichtung (17) und der Gleitschieneneinrichtung (18) derart angeordnet ist, dass die Gleitschieneneinrichtung (18) gegenüber der Führungsschieneneinrichtung (17) spielfrei gelagert angeordnet ist.

11. Verwendung eines Fahrzeugsitzes (1) nach einem der Ansprüche 1-10.

## Claims

1. Vehicle seat (1) comprising a seat part (2), a backrest part (3) and a linear guide device (4) for adjusting the vehicle seat (1) in a translational manner, in which the linear guide device (4) comprises a guide rail means (17) and a slide rail means (18) which is displaceable with respect thereto, in which a bearing means (19) interacts between the slide rail means (18) and the guide rail means (17) and at least comprises slide rod elements (23) in order to mount the slide rail means (18) with respect to the guide rail means (17), the slide rod element (23) comprising an elongate undulating base body (24), the slide rod element (23) having an effective external diameter (40) which is greater, at least when the slide rod element (23) is radially (36) unloaded, than a core external diameter (41) of the elongate undulating base body (24), **characterised in that** the base body has a core diameter of between 2 mm and 15 mm, the core diameter corresponding to the base body material cross section.

2. Vehicle seat (1) according to claim 1, **characterised in that** the slide rod element (23) comprises a radial coil spring element (44).

3. Vehicle seat (1) according to either claim 1 or claim 2, **characterised in that** along the longitudinal extent (25) of the slide rod element (23) is helically twisted.

4. Vehicle seat (1) according any of claims 1 to 3, **characterised in that** the slide rod element (23) is surface-coated with Teflon.

5. Vehicle seat (1) according to any of claims 1 to 3, **characterised in that** the slide rod element (23), at least when radially (36) unloaded, is in radial (36) operational contact, along the longitudinal extent (25) thereof, with the guide rail means (17) and/or with the slide rail means (18) only at certain points.

6. Vehicle seat (1) according to any of claims 1 to 5, **characterised in that** the slide rod element (23) forms an envelope (50) which encloses a three-dimensional volume along the longitudinal extent (25) of the slide rod element (23), which volume is larger than a three-dimensional volume enclosed by the slide rod element (23).

7. Vehicle seat (1) according to any of claims 1 to 6, **characterised in that** the slide rod element (23) has a radial spring excursion (51) of more than 0.3 mm, preferably more than 0.5 mm, and less than 5 mm, preferably less than 1.5 mm, ideally 0.75 mm.

8. Vehicle seat (1) according to any of claims 1 to 7, **characterised in that** the bearing means (20) comprises roll body elements (21).

9. Vehicle seat (1) according to any of claims 1 to 8, **characterised in that** the guide rail means (17) and/or the slide rail means (18) are each formed by at least one functional component of the vehicle seat (1).

10. Vehicle seat (1) according to any of claims 1 to 9, **characterised in that** the slide rod element (23) is arranged in a manner radially (36) prestressed between the guide rail means (17) and the slide rail means (18) such that the slide rail means (18) is arranged so as to be mounted without play relative to the guide rail means (17).

11. Use of a vehicle seat (1) according to any of claims 1 to 10.

## Revendications

1. Siège de véhicule (1), comportant une partie d'assise (2), une partie de dossier (3) et un dispositif de guidage linéaire (4) pour le déplacement en translation du siège de véhicule (1), dans lequel le dispositif de guidage linéaire (4) comporte un dispositif formant glissière (17) et un dispositif à rail coulissant (18), mobile par rapport à ce dernier, dans lequel entre le dispositif à rail coulissant (18) et le dispositif formant glissière (17) interagit un dispositif de palier (19) qui comporte au moins des tiges de glissement (23) pour maintenir le dispositif à rail coulissant (18) par rapport au dispositif formant glissière (17),
la tige de glissement (23) comportant un corps de base (24) allongé ondulé, ladite tige de glissement (23) ayant un diamètre extérieur effectif (40) qui, au moins à l'état non chargé de la tige de glissement (23) dans le sens radial (36), est supérieur à un diamètre extérieur de l'âme (41) du corps de base (24) allongé ondulé,
**caractérisé en ce que** le corps de base possède un diamètre de l'âme compris entre 2 mm et 15 mm, le diamètre de l'âme correspondant à la section transversale du matériau du corps de base.

2. Siège de véhicule (1) selon la revendication 1, **caractérisé en ce que** la tige de glissement (23) comporte un élément à ressort hélicoïdal radial (44).

3. Siège de véhicule (1) selon les revendications 1 ou 2, **caractérisé en ce que** la tige de glissement (23) est tournée en forme de spirale le long de son extension longitudinale (25).

4. Siège de véhicule (1) selon l'une quelconque des revendications 1 à 3, **caractérisé en ce que** la tige de glissement (23) comporte un revêtement de surface en téflon.

5. Siège de véhicule (1) selon l'une quelconque des revendications 1 à 3, **caractérisé en ce que** la tige de glissement (23), au moins à l'état non chargé dans le sens radial (36), est en contact actif le long de son extension longitudinale (25), uniquement ponctuel dans le sens radial (36), avec le dispositif formant glissière (17) et/ou avec le dispositif à rail coulissant (18).

6. Siège de véhicule (1) selon l'une quelconque des revendications 1 à 5, **caractérisé en ce que** la tige de glissement (23) forme une enveloppante (50) qui, le long de l'extension longitudinale (25) de la tige de glissement (23), entoure un volume qui est supérieur au volume entouré par la tige de glissement (23).

7. Siège de véhicule (1) selon l'une quelconque des revendications 1 à 6, **caractérisé en ce que** la tige de glissement (23) possède un débattement (51) radial de plus de 0,3 mm, de préférence de plus de 0,5 mm, et de moins de 5 mm, de préférence de moins de 1,5 mm, de manière idéale de 0,75 mm.

8. Siège de véhicule (1) selon l'une quelconque des revendications 1 à 7, **caractérisé en ce que** le dispositif de palier (20) comporte des corps de roulement (21).

9. Siège de véhicule (1) selon l'une quelconque des revendications 1 à 8, **caractérisé en ce que** le dispositif formant glissière (17) et/ou le dispositif à rail coulissant (18) sont réalisés chacun par au moins un élément fonctionnel du siège de véhicule (1).

10. Siège de véhicule (1) selon l'une quelconque des revendications 1 à 9, **caractérisé en ce que** la tige de glissement (23) est disposée de manière précontrainte dans le sens radial (36) entre le dispositif formant glissière (17) et le dispositif à rail coulissant (18), de telle sorte que le dispositif à rail coulissant (18) est monté sans jeu par rapport au dispositif formant glissière (17).

11. Utilisation d'un siège de véhicule (1) selon l'une des revendications 1 à 10.
